# EUROPÄISCHE PATENTANMELDUNG

(11) **EP 2 889 345 A1**
(43) Veröffentlichungstag der Anmeldung: **01.07.2015**
(21) Anmeldenummer: 15150106.1
(22) Anmeldetag: 05.01.2015
(51) Int. Cl.: C09D 191/00, C08L 91/00, D21H 17/06, D21H 17/14, D21H 19/14, D21H 19/46, D21H 21/16, C04B 41/46, C04B 41/47, C09D 5/00, C09D 7/12, C09D 15/00, C08K 5/101

(54) **Verfahren zum Schutz von Materialien**

(30) Priorität: 24.12.2013 DE 102013227156
(71) Anmelder: Organic Protection GmbH, 6111 Volders in Tirol (AT)
(72) Erfinder: Peer, Thomas, 6068 Mils bei Hall in Tirol (AT)
(74) Vertreter: Kilian Kilian & Partner

(57) **Zusammenfassung**

Die vorliegende Erfindung betrifft ein Verfahren zur Behandlung, bevorzugt Hydrophobisierung, mindestens eines Materials umfassend das Behandeln des Materials mit einer Zusammensetzung umfassend mindestens 50 Gew.-% einer Mischung von Monoglyceriden und/oder Diglyceriden und/oder Triglyceriden der Stearin- und/oder Palmitinsäure.

Darüber hinaus beschreibt die vorliegende Erfindung ein hydrophobisiertes Material erhältlich durch ein erfindungsgemäßes Verfahren.

## Beschreibung

Die Erfindung betrifft ein Verfahren zum Schutz mindestens eines Materials. Weiterhin beschreibt die vorliegende Erfindung mindestens ein geschütztes Material erhältlich gemäß dem vorliegenden Verfahren.

Viele Materialien werden durch eine Behandlung, beispielsweise mit einem Lack oder einer Imprägnierung vor Witterungseinflüssen, Schädlings- oder Schimmelbefall geschützt. Weiterhin werden einige Natursteine, insbesondere poröse Natursteine, die beispielsweise in Bauten verwendet werden, vor Schmutz, insbesondere Flüssigkeiten, durch eine Imprägnierung geschützt, die ein Eindringen unerwünschter Flüssigkeiten in die Poren der Natursteine verhindert.

Die hierzu bisher verwendeten Mittel zeigen eine gute Wirksamkeit. Allerdings weisen die durch den Stand der Technik bereitgestellten Mittel eine schlechte Umweltverträglichkeit auf. Weiterhin können bei der Verarbeitung dieser Mittel gesundheitliche Beeinträchtigungen auftreten. Ferner können die Mittel nicht oder nur sehr schwer recycelt werden. Darüber hinaus umfassen die zuvor genannten Mittel Lösungsmittel, die nach dem Auftragen verdampfen und hierdurch eine Gesundheitsgefährdung verursachen können.

Diese Problematik erfährt durch verstärkte Bemühungen um einen nachhaltigen Umgang mit den Ressourcen und eine gesteigerte Beachtung von gesundheitsgefährdenden Chemikalien, die insbesondere durch die Verordnung (EG) Nr. 1907/2006 (REACH-Verordnung) zunehmend Bedeutung erlangt, eine erhöhte Aufmerksamkeit.

In Anbetracht des Standes der Technik ist es Aufgabe der vorliegenden Erfindung ein Verfahren zum Schutz mindestens eines Materials bereitzustellen, das die genannten Nachteile vermeidet. Insbesondere sollte das Verfahren einen ausgezeichneten Schutz des Materials bereitstellen, ohne dass eine Gesundheitsgefährdung oder eine Umweltbelastung hiermit verbunden wäre. Weiterhin sollte das in dem Verfahren eingesetzte Mittel leicht und einfach recycelbar sein.

Weiterhin sollten die Eigenschaften des mit einem Schutz versehenen Materials über eine lange Zeit, auch bei Bewitterung, erhalten bleiben.

Gelöst werden diese sowie weitere nicht explizit genannte Aufgaben, die jedoch aus den hierin einleitend diskutierten Zusammenhängen ohne Weiteres ableitbar oder erschließbar sind, durch ein Verfahren mit allen Merkmalen des Patentanspruchs 1.

Gegenstand der vorliegenden Erfindung ist dementsprechend ein Verfahren zum Schutz mindestens eines Materials umfassend das Behandeln des Materials mit einer Zusammensetzung umfassend mindestens mindestens 50 Gew.-% einer Mischung von Monoglyceriden und/oder Diglyceriden und/oder Triglyceriden der Stearin- und/oder Palmitinsäure.

Hierdurch gelingt es auf nicht vorhersehbare Weise ein Verfahren zur Verfügung zu stellen, mit der Materialien erhältlich sind, die über ein hervorragendes Eigenschaftsprofil verfügen. Durch das Auftragen einer Zusammensetzung umfassend mindestens 50 Gew.-% einer Mischung von Monoglyceriden und/oder Diglyceriden und/oder Triglyceriden der Stearin- und/oder Palmitinsäure wird überraschend eine im Wesentlichen fehlerfreie Oberfläche erhalten, die keine Risse oder Blasen umfasst. Weiterhin zeigt die Oberfläche keine schmierige oder fettartige Beschaffenheit, sondern weist eine übliche Festigkeit auf. Weiterhin zeigt eine erfindungsgemäß einsetzbare Zusammensetzung in vielen Materialien, insbesondere Holz, Beton, Stein oder Cellulose umfassende Flächengebilde, beispielsweise Papier, Pappe oder Karton, eine ausgezeichnete Penetration, so dass die Zusammensetzung tief in die Struktur der Materialien eindringt und zu einem ausgezeichneten Schutz führt.

Insbesondere weisen die durch das erfindungsgemäße Verfahren geschützten Materialien eine besonders hohe Umweltfreundlichkeit auf. Ferner kann das zum Schutz der Materialien eingesetzt Mittel leicht recycelt werden. Darüber hinaus kann das Mittel einfach und ohne Gefährdung der Gesundheit verarbeitet werden. Ferner ist ein Einsatz im Lebensmittelbereich möglich. Weiterhin umfasst eine bevorzugte Zusammensetzung kein Lösungsmittel, so dass keine Ausdampfung von Stoffen erfolgt, die zu einer Gesundheitsgefährdung führt.

Das erfindungsgemäße Verfahren dient zum Schutz mindestens eines Materials. Der Begriff "zum Schutz mindestens eines Materials" bedeutet zum Schutz eines Materials oder mehrerer Materialien. Gemäß einer bevorzugten Ausführungsform dient das Verfahren zum Schutz von Materialien.

Die Schutzwirkung steht hierbei im Zusammenhang mit dem zu schützenden Material. So kann insbesondere Holz beispielsweise vor Verwitterung oder einem Befall mit Schädlingen oder Schimmel bewahrt werden. Ferner verhindert das Verfahren das Eindringen von Flüssigkeiten in das Holz, so dass ein Verfaulen des Holzes vermieden werden kann. Bei Beton kann das Verfahren ein Eindringen von Wasser verhindern, so dass Beschädigungen durch Frosteinflüsse vermieden werden können. Weiterhin wird beim Verarbeiten von Beton vielfach Metall, insbesondere Stahl eingesetzt, der bei Kontakt mit Wasser korrodieren kann. Durch das vorliegende Verfahren kann demgemäß einer Korrosion von Stahlbeton entgegengewirkt werden. Natursteine, die beispielsweise als Bodenbelag Verwendung finden, sind vielfach porös. Zu einer Verschmutzung führende Flüssigkeiten, die mit dem Belag unerwünscht in Berührung kommen, beispielsweise Rotwein oder Öle, können in diese Poren eindringen und den Bodenbelag nachteilig verfärben. Die Behandlung von Steinen, insbesondere Natursteinen, gemäß dem vorliegenden Verfahren führt zu einer Verfüllung der Poren und verhindert so, dass eine bleibende Verfärbung des Steines eintritt.

Zu den bevorzugten Materialien zählen demgemäß Baustoffe, vorzugsweise Konstruktionsbaustoffe, insbesondere Holz, Beton oder Stein, besonders bevorzugt Naturstein. Diese Materialien liegen bei einer Behandlung mit einer erfindungsgemäß einsetzbaren Zusammensetzung vorzugsweise in Form eines Formkörpers oder eines Flächengebildes vor. Gemäß einem bevorzugten Aspekt wird Beton gemäß dem vorliegenden Verfahren geschützt.

Gemäß einem weiteren Aspekt der vorliegenden Erfindung können Papiere, Pappe und Karton gemäß dem vorliegenden Verfahren geschützt, insbesondere hydrophobisiert werden. Hierdurch können die behandelten Papiere, Pappe und Kartone vielseitig eingesetzt werden. Vorteilhaft können die behandelten Materialien unter anderem im Lebensmittelbereich eingesetzt werden.

Bei dem erfindungsgemäßen Verfahren wird mindestens ein Material behandelt. Die Art der Behandlung hängt ebenfalls vom Material und von der beabsichtigten Schutzwirkung ab. So kann beispielsweise eine Beschichtung aufgetragen werden, die im Wesentlichen auf der Oberfläche des Materials gebildet wird. Vorzugsweise kann die zur Behandlung eingesetzte Zusammensetzung jedoch in gegebenenfalls vorhandene Poren des Materials eingebracht werden. Demgemäß ist ein bevorzugtes Material porös.

Die zur Behandlung eingesetzte Zusammensetzung umfasst mindestens 50 Gew.-%, vorzugsweise mindestens 70 Gew.-% und speziell bevorzugt mindestens 90 Gew.-% einer Mischung von Monoglyceriden und/oder Diglyceriden und/oder Triglyceriden, der Stearin- und/oder Palmitinsäure. Demgemäß weist die erfindungsgemäß verwendete Beschichtungszusammensetzung mindestens 50 Gew.-% an Monoglyceriden und/oder Diglyceriden und/oder Triglyceriden der Stearin- und/oder Palmitinsäure auf. Ein Glycerid der Stearinsäure ist ein Ester von Glycerin und Stearinsäure. Ein Glycerid der Palmitinsäure ist ein Ester von Glycerin und Palmitinsäure. Umfasst die Zusammensetzung Di- und/oder Triglyceride der Stearinund Palmitinsäure, so kann die Mischung Di- und/oder Triglyceride der Stearinsäure und Di- und/oder Triglyceride der Palmitinsäure enthalten, oder aber Di- und/oder Triglyceride, die sowohl Palmitinsäurestergruppen als auch Sterarinsäureestergruppen aufweisen. Neben Stearin- und/oder Palmitinsäure kann ein Di- oder Triglyceriden der Stearin- und/oder Palmitinsäure weitere organische Säuren, insbesondere Fettsäuren enthalten. Vorzugsweise umfasst die Mischung von Monoglyceriden und/oder Diglyceriden und/oder Triglyceriden der Stearin- und/oder Palmitinsäure höchstens 20 Gew.-%, besonders bevorzugt höchstens 10 Gew.% und speziell bevorzugt höchstens 5 Gew.-% an Resten von weiteren Fettsäuren.

Gemäß einer bevorzugten Ausführungsform umfasst die zur Behandlung eingesetzte Zusammensetzung mindestens 50 Gew.-%, vorzugsweise mindestens 70 Gew.-% und speziell bevorzugt mindestens 90 Gew.-% einer Mischung von Mono-, Di- oder Triglyceriden, der Stearin- und/oder Palmitinsäure. Demgemäß weist diese erfindungsgemäß verwendete Beschichtungszusammensetzung mindestens 50 Gew.-% an Mono-, Di- oder Triglyceriden der Stearin- und/oder Palmitinsäure auf. Umfasst die Zusammensetzung Glyceride der Stearin- und Palmitinsäure, so kann die Mischung Glyceride der Stearinsäure und Glyceride der Palmitinsäure enthalten, oder aber gemischte Glyceride z.B. auch Glyceride, die sowohl Palmitinsäurestergruppen als auch Sterarinsäureestergruppen aufweisen. Neben Stearin- und/oder Palmitinsäure kann ein Di- oder Triglyceriden der Stearin- und/oder Palmitinsäure weitere organische Säuren, insbesondere Fettsäuren enthalten. Vorzugsweise umfasst die Mischung von Mono-, Di- oder Triglyceriden der Stearin- und/oder Palmitinsäure höchstens 20 Gew.-%, besonders bevorzugt höchstens 10 Gew.-% und speziell bevorzugt höchstens 5 Gew.-% an Resten von weiteren Fettsäuren.

Vorzugsweise kann das Gewichtsverhältnis von Stearin- zu Palmitinsäuregruppen in der Mischung von Monoglyceriden und/oder Diglyceriden und/oder Triglyceriden im Bereich von 10:1 bis 1:10, besonders bevorzugt im Bereich von 4:1 bis 1:4 und speziell bevorzugt im Bereich von 3:1 bis 1:3 liegen.

Gemäß einer ersten bevorzugten Ausführungsform kann das Gewichtsverhältnis von Stearin- zu Palmitinsäuregruppen in der Mischung von Monoglyceriden und/oder Diglyceriden und/oder Triglyceriden im Bereich von 10:1 bis 1:2, besonders bevorzugt im Bereich von 4:1 bis 1:1 und speziell bevorzugt im Bereich von 3:1 bis 3:2 liegen. In dieser Ausführungsform kann die Mischung weiterhin einen oder mehrere Ester von ungesättigten Fettsäuren enthalten.

Gemäß einer zweiten bevorzugten Ausführungsform kann das Gewichtsverhältnis von Stearin- zu Palmitinsäuregruppen in der Mischung von Monoglyceriden und/oder Diglyceriden und/oder Triglyceriden im Bereich von 2:1 bis 1:5, besonders bevorzugt im Bereich von 3:1 bis 1:4 und speziell bevorzugt im Bereich von 1:1 bis 1:2 liegen. In dieser Ausführungsform kann die Mischung weiterhin einen oder mehrere Ester von Fettsäuren mit 15 oder weniger Kohlenstoffatomen enthalten.

Eingesetzt wird eine Mischung aus mindestens zwei unterschiedlichen Komponenten. So kann die Mischung beispielsweise Glyceroltristearat und Glyceroltripalmitat umfassen. Bevorzugt sind insbesondere Mischungen, die mindestens ein Triglycerid und mindestens ein Diglycerid enthalten. Weiterhin sind Mischungen bevorzugt, die mindestens ein Triglycerid und mindestens ein Monoglycerid enthalten. Speziell bevorzugt sind Mischungen, die mindestens ein Monoglycerid, mindestens ein Diglycerid und mindestens ein Triglycerid enthalten.

Ferner kann vorgesehen sein, dass die Zusammensetzung mindestens 50 Gew.-%, besonders bevorzugt mindestens 60 Gew.-% und speziell bevorzugt mindestens 65 Gew.-% an Triglyceriden der Stearin- und/oder Palmitinsäure umfasst. Diese Triglyceride der Stearin- und/oder Palmitinsäure können ebenfalls weitere Fettsäuren umfassen, wobei der Gehalt an weiteren Fettsäuren vorzugsweise auf höchstens 20 Gew.-%, besonders bevorzugt höchstens 10 Gew.-% und speziell bevorzugt höchstens 5 Gew.-% begrenzt ist, bezogen auf das Gewicht der Triglyceride der Stearin- und/oder Palmitinsäure.

Weiterhin kann vorgesehen sein, dass die Zusammensetzung mindestens 3 Gew.-%, besonders bevorzugt mindestens 5 Gew.-% und speziell bevorzugt mindestens 10 Gew.-% an Diglyceriden der Stearin- und/oder Palmitinsäure umfasst. Diese Diglyceride der Stearin- und/oder Palmitinsäure können ebenfalls weitere Fettsäuren umfassen, wobei der Gehalt an weiteren Fettsäuren vorzugsweise auf höchstens 20 Gew.-%, besonders bevorzugt höchstens 10 Gew.-% und speziell bevorzugt höchstens 5 Gew.-% begrenzt ist, bezogen auf das Gewicht der Diglyceride der Stearin- und/oder Palmitinsäure.

Darüber hinaus kann vorgesehen sein, dass die Zusammensetzung mindestens 3 Gew.-%, besonders bevorzugt mindestens 5 Gew.-% und speziell bevorzugt mindestens 10 Gew.-% an Stearinsäuremonoglycerid und/oder Palmitinsäuremonoglycerid umfasst.

Vorzugsweise kann vorgesehen sein, dass die Mischung von Monoglyceriden und/oder Diglyceriden und/oder Triglyceriden der Stearin- und/oder Palmitinsäure ein Zahlenmittel des Molekulargewichts im Bereich von 600 bis 860 g/mol, besonders bevorzugt 750 bis 850 und speziell bevorzugt 780 bis 840 g/mol aufweist. Das Zahlenmittel des Molekulargewichts kann beispielsweise über den Gehalt an freien Hydroxygruppen der Estermischung bestimmt werden.

Ein Teil der Stearinsäure kann auch durch Hydroxystearinsäure, vorzugsweise 12-oder 18- Hydroxystearinsäure ersetzt werden, so dass Hydroxystearinsäure bei der zuvor dargelegten Definition der Monoglyceriden und/oder Diglyceriden und/oder Triglyceriden der Stearin- und/oder Palmitinsäure nicht zu den anderen Fettsäuren zählt.

Geeignete Mischungen von Monoglyceriden und/oder Diglyceriden und/oder Triglyceriden der Stearin- und/oder Palmitinsäure können kommerziell erhalten werden, wobei diese Mischungen von Monoglyceriden und/oder Diglyceriden und/oder Triglyceriden der Stearin- und/oder Palmitinsäure beispielsweise unter der CAS-Nummer CAS 68002-71-1 bekannt sind.

Die zuvor genannten Monoglyceride und/oder Diglyceride und/oder Triglyceride der Stearin- und/oder Palmitinsäure können im Wesentlichen aus Naturprodukten, insbesondere aus Talg oder aus Palmöl gewonnen werden, so dass diese Produkte eine ausgezeichnete Umweltfreundlichkeit aufweisen und biologisch abbaubar sind. Weiterhin können die Monoglyceride und/oder Diglyceride und/oder Triglyceride der Stearin- und/oder Palmitinsäure auch aus Abfällen erhalten werden.

Neben der Mischung von Monoglyceriden und/oder Diglyceriden und/oder Triglyceriden der Stearin- und/oder Palmitinsäure kann die zur Behandlung eingesetzte Zusammensetzung weitere Komponenten insbesondere Fettsäuren und/oder Fettsäureester enthalten.

Hierzu kommen insbesondere Ester von weiteren Fettsäuren mit 6 bis 30, vorzugsweise 12 bis 24, besonders bevorzugt 12 bis 22 Kohlenstoffatomen, weiter bevorzugt 14 bis 22 Kohlenstoffatomen, beispielsweise von Kaprylsäure, Kaprinsäure, Laurinsäure, Myristinsäure, Margarinsäure, Arachinsäure, Behensäure, Lignocerinsäure, Cerotinsäure, Palmitolsäure, Ölsäure, Elaidinsäure, Petroselinsäure, Ricinolsäure, Elaeostearinsäure, Linolsäure, Linolensäure, Eicosansäure, Gadoleinsäure, Docosansäure oder Erucasäure in Betracht.

Zu den bevorzugten Komponenten gehören insbesondere Ester von ungesättigten Fettsäuren mit mindestens 16 Kohlenstoffatomen, vorzugsweise Ester der Ölsäure und/oder Linolsäure, beispielsweise die Glycerinester der genannten Säuren.

Der Anteil an Ester von ungesättigten Fettsäuren mit mindestens 16 Kohlenstoffatomen kann vorzugsweise im Bereich von 1 bis 50 Gew.-%, besonders bevorzugt im Bereich von 5 bis 40 Gew.-% und speziell bevorzugt im Bereich von 10 bis 30 Gew.-% liegen, bezogen auf das Gewicht der zur Behandlung des Materials eingesetzten Zusammensetzung. Falls diese Ester von mehrwertigen Alkoholen, beispielsweise Glycerin abgeleitet sind, weisen diese Ester von ungesättigten Fettsäuren bevorzugt nur einen geringen Anteil an gesättigten Fettsäuren auf, der vorzugsweise unter 40 Gew.-%, besonders bevorzugt auf höchstens 20 Gew.-% und speziell bevorzugt auf 10 Gew.-% des Esters von ungesättigten Fettsäuren.

Durch eine Kombination einer Mischung von Monoglyceriden und/oder Diglyceriden und/oder Triglyceriden der Stearin- und/oder Palmitinsäure mit einem oder mehreren Estern von ungesättigten Fettsäuren, vorzugsweise der Ölsäure und/oder Linolsäure, kann überraschend die Verarbeitbarkeit der Zusammensetzung gesteigert werden, ohne dass deren Schutzwirkung unzumutbar verringert wird. So nimmt die Fähigkeit der Zusammensetzung in Poren einzudringen überraschend zu, ohne dass die Haptik der Oberfläche verändert werden würde. Diese Ziele werden insbesondere in Kombination mit einer Mischung von Monoglyceriden und/oder Diglyceriden und/oder Triglyceriden der Stearin- und/oder Palmitinsäure erhalten, die einen hohen Anteil an Stearinsäuregruppen aufweist.

Der Anteil an Komponenten, die Fettsäurereste mit weniger als 15 Kohlenstoffatomen aufweisen, ist vorzugsweise auf höchstens 40 Gew.-%, besonders bevorzugt auf höchstens 20 Gew.-% und speziell bevorzugt auf 10 Gew.-% begrenzt, bezogen auf die zur Behandlung des Materials eingesetzte Zusammensetzung. Der Anteil an Gruppen, die von Fettsäuren mit weniger als 15 Kohlenstoffatomen abgeleitet sind, beträgt gemäß einer bevorzugten Ausführungsform vorzugsweise weniger als 30 Gew.-%, besonders bevorzugt weniger als 15 Gew.-% und speziell bevorzugt weniger als 10 Gew.-%, bezogen auf die zur Behandlung des Materials eingesetzte Zusammensetzung.

Gemäß einer bevorzugten Ausführungsform kann die als Behandlungsmittel eingesetzte Zusammensetzung Komponenten, die Fettsäurereste mit weniger als 15 Kohlenstoffatomen, besonders bevorzugt 10 bis 14 Kohlenstoffatome, speziell bevorzugt 12 bis 14 Kohlenstoffatome, aufweisen, insbesondere Ester, vorzugsweise Glycerinester, enthalten. Hierbei sind gesättigte Fettsäuren bevorzugt. Der Anteil kann vorzugsweise im Bereich von 0,01 bis 20 Gew.-%, besonders bevorzugt im Bereich von 0,5 bis 10 Gew.-% und speziell bevorzugt im Bereich von 1 bis 5 Gew.-% liegen. Hierbei sind insbesondere Ester der Laurinsäure und/oder Myristinsäure bevorzugt, wobei Glycerinester dieser Säuren besonders bevorzugt sind.

Durch eine Kombination einer Mischung von Monoglyceriden und/oder Diglyceriden und/oder Triglyceriden der Stearin- und/oder Palmitinsäure mit einem oder mehreren Estern von Fettsäuren mit weniger als 15 Kohlenstoffatomen, vorzugsweise der Myristinsäure und/oder Laurinsäure, kann überraschend die Verarbeitbarkeit der Zusammensetzung gesteigert werden, ohne dass deren Schutzwirkung unzumutbar verringert wird. So nimmt die Fähigkeit der Zusammensetzung in Poren einzudringen überraschend zu, ohne dass die Haptik der Oberfläche verändert werden würde. Diese Ziele werden insbesondere in Kombination mit einer Mischung von Monoglyceriden und/oder Diglyceriden und/oder Triglyceriden der Stearin- und/oder Palmitinsäure erhalten, die einen hohen Anteil an Palmitinsäuregruppen aufweist.

Gemäß einer bevorzugten Ausführungsform umfasst die zur Behandlung eingesetzte Zusammensetzung höchstens 10 Gew.-%, vorzugsweise höchstens 5 Gew.-% und besonders bevorzugt höchstens 3 Gew.-% an freien Fettsäuren und/oder Fettsäuresalzen.

Ferner kann vorgesehen sein, dass die Fettsäureester-Komponenten der als Behandlungsmittel eingesetzten Zusammensetzung einen Erweichungspunkt (Congealing Point) gemäß ASTM D938 - 12 im Bereich von 40°C bis 70°C, bevorzugt 45°C bis 65°C aufweisen.

Das in der Zusammensetzung enthaltene Fettsäurespektrum kann gemäß einer ersten Ausführungsform vorzugsweise folgende Komponenten umfassen, gemessen gemäß DIN EN ISO 5508. Angabe in Gewichtsprozent.

| Fettsäurerest | Bevorzugter Bereich | Besonders bevorzugter Bereich | Speziell bevorzugter Bereich |
|---|---|---|---|
| C-12 (Laurinsäure) | < 10 | < 5 | < 0,5 |
| C-14 (Myristinsäure) | < 10 | < 5 | < 0,5 |
| C-16 (Palmitinsäure) | 5 bis 80 | 15 bis 45 | 25 bis 40 |
| C-16:1 (Palmitoleinsaure) | < 10 | < 5 | < 0,5 |
| C-18 (Stearinsäure) | 20 bis 70 | 30 bis 60 | 40 bis 50 |
| C-18:1 (Ölsaure) | < 35 | 10 bis 28 | 15 bis 22 |
| C-18:2 (Linolsäure) | < 20 | 1,5 bis 14,0 | 2,5 bis 8,0 |
| C-18-3 (Linolensäure) | < 10 | < 5 | < 0,5 |
| C-20 (Arachinsäure) | < 10 | < 5 | < 0,5 |
| C-20:1 (Gadoleinsäure) | < 10 | < 5 | < 0,5 |
| C-22 (Behensäure) | < 10 | < 5 | < 0,5 |
| C-22:1 (Erucasäure) | < 10 | < 5 | < 0,5 |

Gemäß einer weiteren Ausführungsform kann das in der Zusammensetzung enthaltene Fettsäurespektrum vorzugsweise folgende Komponenten umfassen, gemessen gemäß DIN EN ISO 5508. Angabe in Gewichtsprozent.

| Fettsäurerest | Bevorzugter Bereich | Besonders bevorzugter Bereich | Speziell bevorzugter Bereich |
|---|---|---|---|
| C-12 (Laurinsäure) | < 10 | 0,1 bis 5 | 0,2 bis 3 |
| C-14 (Myristinsäure) | < 15 | 0,1 bis 10 | 0,2 bis 5 |
| C-16 (Palmitinsäure) | 5 bis 80 | 30 bis 70 | 50 bis 60 |
| C-16:1 (Palmitoleinsaure) | < 10 | < 5 | < 0,5 |
| C-18 (Stearinsäure) | 20 bis 70 | 30 bis 60 | 40 bis 50 |
| C-18:1 (Ölsaure) | < 10 | < 5 | < 0,5 |
| C-18:2 (Linolsäure) | < 10 | < 5 | < 0,5 |
| C-18-3 (Linolensäure) | < 10 | < 5 | < 0,5 |
| C-20 (Arachinsäure) | < 10 | < 5 | < 0,5 |
| C-20:1 (Gadoleinsäure) | < 10 | < 5 | < 0,5 |
| C-22 (Behensäure) | < 10 | < 5 | < 0,5 |
| C-22:1 (Erucasäure) | < 10 | < 5 | < 0,5 |

Zu den weiteren Komponenten, die in der erfindungsgemäß einsetzbaren Zusammensetzung enthalten sein können, zählen unter anderem Farbmittel. Ein Farbmittel ist nach DIN 55943 die Sammelbezeichnung für alle farbgebenden Stoffe. Zu den farbgebenden Stoffen gehören unter anderem lösliche Farbstoffe und anorganische oder organische Pigmente. Diese Farbmittel können einzeln oder als Mischung von zwei oder mehreren eingesetzt werden. So können insbesondere Mischungen organischer Farbpigmente mit löslichen organischen Farbstoffen eingesetzt werden. Weiterhin können Mischungen eingesetzt werden, die anorganische und organische Farbpigmente umfassen. Darüber hinaus können Mischungen verwendet werden, die zusätzlich zu den anorganischen Farbpigmenten lösliche organische Farbstoffe enthalten. Weiterhin sind Mischungen zweckmäßig, die lösliche Farbstoffe und anorganische und organische Pigmente umfassen. Die zuvor dargelegten Farbmittel sind unter anderem in Kirk Orthmer Encyclopedia of Chemical Technology, Third Edition, vol. 19, pp. 1 bis 78 und in Ullmann's Encyclopedia of Industrial Chemistry 5. Auflage auf CD-ROM dargelegt.

Zu den bevorzugten organischen Farbpigmenten gehören unter anderem Azo- und Diazo-Farbstoffe, Phthalocyanine, Perylene, Methine und Anthrachinone.

Beispiele für organische lösliche Farbstoffe sind unter anderem Anthrapyrimidine, Chinophthalon, Perinone oder Monoazofarbstoffe.

Bevorzugte anorganische Pigmente sind unter anderem Zinkchromat, Cadmiumsulfid, Chromoxyd, Ultramarin-Pigmente und Metallflitter, ferner BaSO₄ und TiO₂, sowie Ruß (Carbon Black).

Die Menge an optional einsetzbaren Farbmittel kann zwischen 0,01 Gew.-% bis 10 Gew.-%, bevorzugt 0,05 Gew.-% und 5 Gew.-% und ganz besonders bevorzugt im Bereich von 0,1 Gew.-% bis 2 Gew.-%, bezogen auf das Gesamtgewicht der Zusammensetzung, liegen.

Ferner kann vorgesehen sein, dass die zur Behandlung eingesetzte Zusammensetzung einen Erweichungspunkt (Congealing Point) gemäß ASTM D938 - 12 im Bereich von 40°C bis 70°C, bevorzugt 45°C bis 65°C aufweist.

Gemäß einer bevorzugten Ausführungsform besteht eine bevorzugt für das erfindungsgemäße Verfahren einsetzbare Zusammensetzung im Wesentlichen aus biologischen Stoffen. Biologische Stoffe sind in diesem Zusammenhang Verbindungen, die in der Natur vorkommen und biologisch abbaubar sind. Im Wesentlichen bedeutet, dass mindestens 95 Gew.-%, vorzugsweise mindestens 99 Gew.-% der Zusammensetzung aus biologischen Stoffen aufgebaut ist.

Vorzugsweise kann zur Behandlung des mindestens einen Materials eine Zusammensetzung umfassend mindestens 50 Gew.-% einer Mischung von Monoglyceriden und/oder Diglyceriden und/oder Triglyceriden der Stearin- und/oder Palmitinsäure geschmolzen werden. Die geschmolzene Zusammensetzung wird anschließend in flüssigem Zustand mit dem mindestens einen Material in Kontakt gebracht. Hierbei kann das Material vorzugsweise auf eine Temperatur gebracht werden, die ein Eindringen der Zusammensetzung in Poren des Materials ermöglicht. Nach der Behandlung wird das Material abgekühlt, so dass die Zusammensetzung in dem Material fest wird. Die flüssige Zusammensetzung kann hierbei mit jedem bekannten Verfahren erfolgen. Hierzu gehört beispielsweise Tauchbeschichtung, Pinselauftrag, Walzenauftrag, Flutbeschichtung und Sprühbeschichtung.

Gemäß einer bevorzugten Ausführungsform kann das Material, insbesondere ein Formkörper auf eine hohe Temperatur gebracht werden, um selbigen zu trocknen. Während oder nach dem Trocknungsvorgangs wird der auf eine hohe Temperatur gebrachte Formkörper mit der flüssigen Zusammensetzung in Kontakt gebracht, beispielsweise geflutet oder getaucht.

Die untere Temperaturgrenze ergibt sich hierbei aus der Schmelztemperatur der zur Behandlung eingesetzten Zusammensetzung, die obere aus dem Zündpunkt derselbigen. Vorzugsweis kann die Temperatur, bei der eine Trocknung und eine Behandlung stattfindet, im Bereich von 50 bis 300 °C, besonders bevorzugt 80 bis 250 °C und speziell bevorzugt 100 bis 200 °C liegen.

Beim Abkühlen verfestigt sich die Zusammensetzung umfassend mindestens 50 Gew.-% einer Mischung von Monoglyceriden und/oder Diglyceriden und/oder Triglyceriden der Stearin- und/oder Palmitinsäure bevorzugt in den Poren und/oder Hohlräumen des Materials. Hierbei entsteht eine gut schützende Oberfläche, die im Wesentlichen frei von Rissen oder Blasen ist.

Diese Trocknungstechnik eignet sich prinzipiell für alle wichtigen Materialien, unter anderem aus Beton, insbesondere Sichtbeton, Zementmischungen, Ziegel und Mauerwerk. Diese Trocknung der Materialien kann auch bei einem hohen Wassergehalt durchgeführt werden, ist also für die Materialien in gegossener, gepresster, trocknender oder gehärteter Form einsetzbar.

Überraschend kann hierbei eine besonders gute Trocknung erzielt werden, da die zur Behandlung eingesetzte Zusammensetzung das Wasser aus dem Material verdrängt. Hierdurch kann ein Wassergehalt von kleiner <0,1 Gew.-%, vorzugsweise 0,05 Gew.-% und speziell bevorzugt kleiner als 0,01 Gew.-% erhalten werden, der durch den Schutz über Jahre erhalten bleibt.

Durch die vorliegende Erfindung können Materialien, die im Bauwesen, wie z.B. Beton, Holz, Stein, alle Arten von Ziegel und Mauerwerk, in der Holzindustrie und Papierindustrie eingesetzt werden, sehr gut vor Wasser geschützt werden, wobei ein extrem niedriger Wassergehalt auch bei hoher Luftfeuchtigkeit erhalten bleibt.

Gemäß einer weiteren Ausgestaltung der vorliegenden Erfindung kann die Zusammensetzung umfassend mindestens 50 Gew.-% einer Mischung von Monoglyceriden und/oder Diglyceriden und/oder Triglyceriden der Stearin- und/oder Palmitinsäure in fester Form, beispielsweise als Granulat oder Pulver dem Rohmaterial, zum Beispiel einem Zement und/oder einem Beton eingemischt/beigemengt werden. Hierbei kann die Zusammensetzung die zuvor näher dargelegten Farbstoffe oder andere Farbmittel enthalten. Die Zugabe kann einem Bestandteil des Materials zugegeben werden. Weiterhin kann die Zusammensetzung bei dem Anmischen des Materials beigefügt werden. Hierzu ist festzuhalten, dass bei der Aushärtung von Baustoffen oft hohe Temperaturen im Material erreicht werden, welche dann zur Schmelzung der Zusammensetzung umfassend mindestens 50 Gew.-% einer Mischung von Monoglyceriden und/oder Diglyceriden und/oder Triglyceriden der Stearin- und/oder Palmitinsäure führen.

Durch diese Ausgestaltung können viele Materialien, beispielsweise Beton, Kalk oder Weiss-Zement auf besonders einfache Weise hydrophobiert werden, wobei die Wärmeenergie zweckmäßig eingesetzt wird.

Ein weiterer Gegenstand der vorliegenden Erfindung ist ein geschütztes Material erhältlich durch ein erfindungsgemäßes Verfahren. Bevorzugt ist das Material hydrophobisiert.

Ein besonders bevorzugter Gegenstand sind insbesondere Verpackungen, die Karton und/oder Papier enthalten oder auf diesen basieren. Insbesondere Verpackungen aus Recyclingmaterial können chemische Restbestände enthalten, so dass diese für Lebensmittelverpackungen nicht geeignet sind. Bisher wurden Beschichtungen aus Kunststoff mit Weichmachern und Paraffinen eingesetzt, die jedoch ebenfalls Bedenken hervorrufen. Die vorliegende Erfindung stellt nunmehr Verpackungen für Lebensmittel, insbesondere solche, die größere Mengen an Karton und/oder Papier enthalten bereit, die eine hygienische und gesundheitlich unbedenkliche Schicht, insbesondere eine Sperrschicht, umfasst, die auf einer erfindungsgemäßen Zusammensetzung umfassend mindestens 50 Gew.-% einer Mischung von Monoglyceriden und/oder Diglyceriden und/oder Triglyceriden der Stearin- und/oder Palmitinsäure beruht oder im Wesentlichen auf derselbigen basiert.

Ein weiterer Gegenstand sind unter anderem Bauten, die durch das vorliegende Verfahren geschützt werden. Durch einen erfindungsgemäßen Schutz werden Flächen, insbesondere Beton- oder Zementflächen nicht oder nur in geringem Maß von Salz angegriffen, welches im Straßenverkehrswesen im Winter benutzt wird. Weiterhin zeigen diese erfindungsgemäß geschützten Flächen eine geringere Verschmutzung auf, da Feinstaub/Staub von Abgasen nicht mehr gut auf beschichteten Flächen liegen bleibt, da die beschichteten Oberflächen sehr glatt sind und auch eine Oberflächenspannung in und auf Materialien aufbauen.

Ein Abperlen von Wasser und Schmutz an der versiegelten Oberfläche, gewährleistet eine bessere Sicht und verbessert dadurch die Sicherheit in Tunnelanlagen und Unterführungen im Straßen- und Schienenverkehr

Nachfolgend sind besonders bevorzugte Ausführungsformen der Erfindung genannt, ohne dass hierdurch eine Beschränkung erfolgen soll:
1. Verfahren zum Schutz mindestens eines Materials, umfassend das Behandeln des Materials mit einer Zusammensetzung umfassend
   - mindestens 50 Gew.-% einer Mischung von Monoglyceriden und/oder Diglyceriden und/oder Triglyceriden der Stearin- und/oder Palmitinsäure, oder
   - mindestens 50 Gew.-% einer Mischung von Mono-, Di- oder Triglyceriden, bevorzugt Triglyceriden, der Stearin- und/oder Palmitinsäure.
2. Verfahren gemäß Ausführungsform 1, wobei das Material Papier/Pappe/Karton oder ein Baustoff, vorzugsweise ein Konstruktionsbaustoff, insbesondere Holz, Beton oder ein Stein ist.
3. Verfahren gemäß Ausführungsform 1 oder 2, wobei die Mischung von Monoglyceriden und/oder Diglyceriden und/oder Triglyceriden der Stearin- und/oder Palmitinsäure ein Zahlenmittel des Molekulargewichts im Bereich von 750 bis 850 aufweist.
4. Verfahren gemäß mindestens einer der vorhergehenden Ausführungsformen, wobei die Zusammensetzung einen Erweichungspunkt (Congealing Point) gemäß ASTM D938 -12 im Bereich von 45°C bis 65°C aufweist.
5. Verfahren gemäß mindestens einer der vorhergehenden Ausführungsformen, wobei die Zusammensetzung mindestens 70 Gew.-% einer Mischung von Monoglyceriden und/oder Diglyceriden und/oder Triglyceriden der Stearin- und/oder Palmitinsäure umfasst.
6. Verfahren gemäß mindestens einer der vorhergehenden Ausführungsformen, wobei die Zusammensetzung mindestens 60 Gew.-% an Triglyceriden der Stearin- und/oder Palmitinsäure umfasst.
7. Verfahren gemäß mindestens einer der vorhergehenden Ausführungsformen, wobei das Gewichtsverhältnis von Stearin- zu Palmitinsäuregruppen in der Mischung von Monoglyceriden und/oder Diglyceriden und/oder Triglyceriden im Bereich von 4:1 bis 1:1 liegt.
8. Verfahren mindestens einer der vorhergehenden Ausführungsformen, wobei die Zusammensetzung mindestens 5 Gew.-% eines Esters der Ölsäure umfasst.
9. Verfahren gemäß mindestens einer der vorhergehenden Ausführungsformen, wobei die Zusammensetzung Ester, vorzugsweise Glycerinester, von gesättigten Fettsäuren, die bevorzugt 10 bis 14 Kohlenstoffatome, speziell bevorzugt 12 bis 14 Kohlenstoffatome, aufweisen, umfasst, weiter bevorzugt, wobei die Ester Glycerinester der Myristinsäure und/oder Laurinsäure sind.
10. Verfahren gemäß Ausführungsform 9, wobei die Zusammensetzung Glycerinester der Myristinsäure und/oder Laurinsäure, bevorzugt der Myristinsäure und Laurinsäure, in einer Menge im Bereich von 1 bis 5 Gew.-% enthält.
11. Verfahren gemäß Ausführungsform 9 oder 10, wobei die Zusammensetzung 96 Gew.-% einer Mischung von Monoglyceriden und/oder Diglyceriden und/oder Triglyceriden der Stearin- und/oder Palmitinsäure enthält.
12. Verfahren gemäß mindestens einer der vorhergehenden Ausführungsformen, wobei die Zusammensetzung geschmolzen wird und das Material mit der geschmolzenen Zusammensetzung behandelt wird.
13. Verfahren gemäß mindestens einer der vorhergehenden Ausführungsformen, wobei das mindestens eine Material Beton ist.
14. Verfahren gemäß mindestens einer der vorhergehenden Ausführungsformen, wobei die Zusammensetzung einen Erweichungspunkt (Congealing Point) gemäß ASTM D938 - 12 im Bereich von 45°C bis 65°C aufweist, und wobei die Zusammensetzung
   - mindestens 5 Gew.-% eines Esters der Ölsäure umfasst und/oder
   - Glycerinester der Myristinsäure und/oder Laurinsäure, bevorzugt der Myristinsäure und Laurinsäure, in einer Menge im Bereich von 1 bis 5 Gew.-% enthält,
   und wobei das mindestens eine Material bevorzugt ein Konstruktionsbaustoff, weiter bevorzugt Beton ist.
15. Hydrophobisiertes Material erhältlich durch ein Verfahren gemäß mindestens einer der Ausführungsformen 1 bis 14.

Nachfolgend soll die vorliegende Erfindung anhand von Beispielen erläutert werden, ohne dass hierdurch eine Beschränkung erfolgen soll.

### Messmethode

Die Messung der Hydrophobierungsqualität erfolgt mit dem "Hydrophobierungsmessgerät HDBMG-02" der Firma BTC Linke & SILCO-TEC GmbH. Das Messverfahren beruht auf dem Prinzip des Ladungstransportes in elektrolytischen Lösungen. Die auf die Betonoberfläche aufgestellten Sensoren geben unter definierten Bedingungen Elektrolytflüssigkeit an den Beton ab. Bei Anlegen einer definierten Spannung findet aus der Elektrolytflüssigkeit ein Ladungstransport statt, der die hydrophobierte Zone über etwaige Fehlstellen durchbricht. Der Ladungsstrom wird vom Messgeber in Form von Zeitabhängigen Einzelwerten registriert, welche dann in Form von Messwert-Zeit-Kurven übernommen werden können. Je höher der gemessene "Hydrowert" ist, desto schlechter ist die Qualität des zu beurteilenden Hydrophobierungsmittels.

### Beispiel 1

Eine erfindungsgemäße Zusammensetzung umfassend ca. 75 Gew.-% einer Mischung von Glyceriden der Stearin- und/oder Palmitinsäure (Gewichtsverhältnis Stearinsäure zu Palmitinsäure etwa 3:2) und ca. 25 Gew.-% eines Glycerinesters basierend auf Ölsäure und Linolsäure (Gewichtsverhältnis Stearinsäure zu Palmitinsäure etwa 3,2:1) wurde hergestellt und auf eine Betonoberfläche aufgetragen.

Die Betonoberfläche wurde sehr gut hydrophobisiert.

### Beispiel 2

Eine erfindungsgemäße Zusammensetzung umfassend ca. 96 Gew.-% einer Mischung von Glyceriden der Stearin- und/oder Palmitinsäure (Gewichtsverhältnis Stearinsäure zu Palmitinsäure etwa 1:1 bis 1:1,5) und ca. 4 Gew.-% eines Glycerinesters basierend auf Myristinsäure und Laurinsäure (Gewichtsverhältnis Myristinsäure zu Laurinsäure etwa 3:1) wurde hergestellt und auf eine Betonoberfläche aufgetragen.

Die Betonoberfläche wurde ausgezeichnet hydrophobisiert, wobei die Hydrophobisierung besser als die in Beispiel 1 ist.

### Vergleichsbeispiele 1 bis 5

Zum Vergleich wurden fünf verschiedene auf Siloxanen und Silanen basierende Hydrophobisierungsmittel auf eine Betonoberfläche aufgetragen. Die erhaltenen Hydrophobisierungen zeigten wesentlich schlechtere Messwerte als die in Beispiel 1 erhaltene Beschichtung.

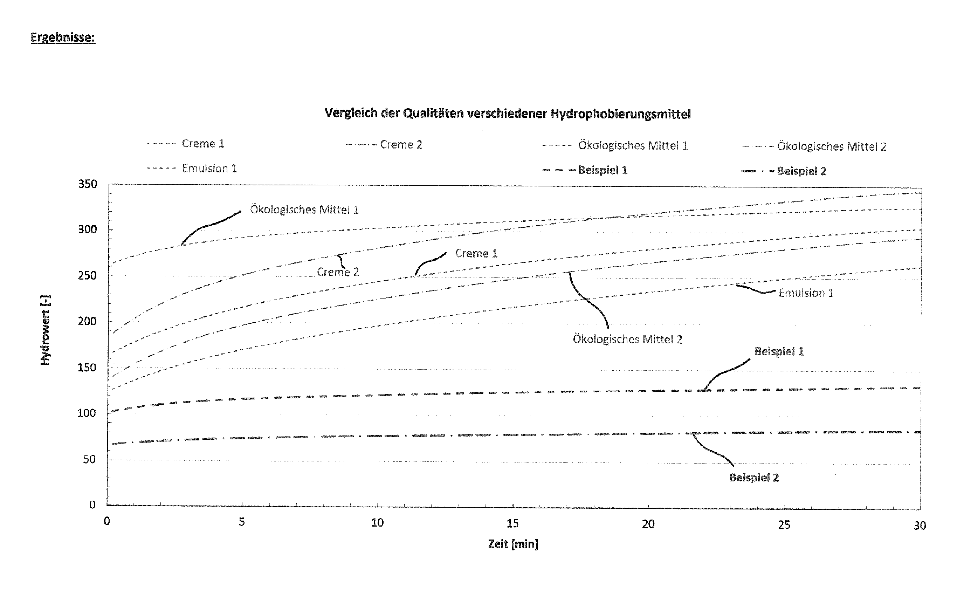

## Patentansprüche

1. Verfahren zum Schutz mindestens eines Materials, umfassend das Behandeln des Materials mit einer Zusammensetzung umfassend mindestens 50 Gew.-% einer Mischung von Monoglyceriden und/oder Diglyceriden und/oder Triglyceriden der Stearin- und/oder Palmitinsäure.

2. Verfahren gemäß Anspruch 1, wobei das Material Papier/Pappe/Karton oder ein Baustoff, vorzugsweise ein Konstruktionsbaustoff, insbesondere Holz, Beton oder ein Stein ist.

3. Verfahren gemäß Anspruch 1 oder 2, wobei die Mischung von Monoglyceriden und/oder Diglyceriden und/oder Triglyceriden der Stearin- und/oder Palmitinsäure ein Zahlenmittel des Molekulargewichts im Bereich von 750 bis 850 aufweist.

4. Verfahren gemäß mindestens einem der vorhergehenden Ansprüche, wobei die Zusammensetzung einen Erweichungspunkt (Congealing Point) gemäß ASTM D938 - 12 im Bereich von 45°C bis 65°C aufweist.

5. Verfahren gemäß mindestens einem der vorhergehenden Ansprüche, wobei die Zusammensetzung mindestens 70 Gew.-% einer Mischung von Monoglyceriden und/oder Diglyceriden und/oder Triglyceriden der Stearin- und/oder Palmitinsäure umfasst.

6. Verfahren gemäß mindestens einem der vorhergehenden Ansprüche, wobei die Zusammensetzung mindestens 60 Gew.-% an Triglyceriden der Stearin- und/oder Palmitinsäure umfasst.

7. Verfahren gemäß mindestens einem der vorhergehenden Ansprüche, wobei das Gewichtsverhältnis von Stearin- zu Palmitinsäuregruppen in der Mischung von Monoglyceriden und/oder Diglyceriden und/oder Triglyceriden im Bereich von 4:1 bis 1:1 liegt.

8. Verfahren gemäß mindestens einem der vorhergehenden Ansprüche, wobei die Zusammensetzung mindestens 5 Gew.-% eines Esters der Ölsäure umfasst.

9. Verfahren gemäß mindestens einem der vorhergehenden Ansprüche, wobei die Zusammensetzung Ester, vorzugsweise Glycerinester, von gesättigten Fettsäuren, die bevorzugt 10 bis 14 Kohlenstoffatome, speziell bevorzugt 12 bis 14 Kohlenstoffatome, aufweisen umfasst, weiter bevorzugt, wobei die Ester Glycerinester der Myristinsäure und/oder Laurinsäure sind.

10. Verfahren gemäß Anspruch 9, wobei die Zusammensetzung Glycerinester der Myristinsäure und/oder Laurinsäure, bevorzugt der Myristinsäure und Laurinsäure, in einer Menge im Bereich von 1 bis 5 Gew.-% enthält.

11. Verfahren gemäß Anspruch 9 oder 10, wobei die Zusammensetzung 96 Gew.-% einer Mischung von Monoglyceriden und/oder Diglyceriden und/oder Triglyceriden der Stearin- und/oder Palmitinsäure enthält.

12. Verfahren gemäß mindestens einem der vorhergehenden Ansprüche, wobei die Zusammensetzung geschmolzen wird und das Material mit der geschmolzenen Zusammensetzung behandelt wird.

13. Hydrophobisiertes Material erhältlich durch ein Verfahren gemäß mindestens einer der Ansprüche 1 bis 12.
